# EUROPEAN PATENT SPECIFICATION

(11) **EP 4 244 544 B1**
(45) Date of publication and mention of the grant of the patent: **01.01.2025**
(21) Application number: 21820687.8
(22) Date of filing: 10.11.2021
(51) Int. Cl.: F24F 13/02, F16L 5/02, H02G 3/08

(54) **FASTENING UNIT FOR PIPE JOINTS**
BEFESTIGUNGSEINHEIT FÜR ROHRVERBINDUNGEN
UNITÉ DE FIXATION POUR LES JOINTS DE TUYAUX

(30) Priority: 10.11.2020 IT 202000026822
(43) Date of publication of application: 20.09.2023
(73) Proprietor: Valsir S.p.A. A Socio Unico, 25078 Vestone (BS) (IT)
(72) Inventor: TIBERTI, Luigi, 25078 Vestone (BS) (IT); PICCINELLI, Gianmario, 25078 Vestone (BS) (IT)
(74) Representative: Studio Torta S.p.A.
(86) International application number: PCT/IB2021/060408
(87) International publication number: WO 2022/101801

(56) References cited:
- EP-A1- 3 299 690
- EP-B1- 3 299 690
- US-A- 5 222 334
- US-A- 5 444 183
- US-A1- 2005 072 778

## Description

### TECHNICAL FIELD

This invention relates to a fastening unit for pipe joints.

### BACKGROUND ART

In various fluid distribution systems, there may be the need to place one or more pipe joints on shared units (boxes, screens, containers of various types), for examples boxes for distributing air in ventilation systems or similar applications.

For this purpose, it is known to use units consisting of containers equipped with multiple seats; the seats are formed so that they pass through one or more walls of the container and are shaped so as to receive joints, for example with a bayonet or interlocking coupling, etc., to which pipe sections are then connected.

The units of this type are normally made of plastic (polymer material) via injection moulding (in particular, if rigid polymer materials are used) or steam moulding (in particular, if polymer foams are used).

Typically, not all the seats are used and some do not receive any joint. If not all the seats are used to support the joints, the remaining seats must be closed by special plugs, in order to ensure that the unit has a fluid-tight seal.

During installation as well, before the fastening of the joints, it may be useful, at least in some applications, to close the seats with plugs, for example to avoid the entry of external substances or to avoid the seat profiles, shaped for coupling to the joints, from being accidentally damaged.

Clearly, the use of plugs complicates the manufacturing and installation steps, requiring the manufacturing of separate elements (plugs) and their mounting where necessary.

There are similar problems with units intended to receive only one joint or pipe, which are therefore equipped with a single seat.

EP3299690A1 discloses a sealing gland for passing cables, pipes or conduits in a sealed fashion through a partition such as a wall or a casing; the gland comprises a frame and a sealing element which is detachable from the frame.

US2005/072778A1 and US5444183A disclose electrical connection boxes, i.e. intended to receive electrical cables, having knockouts which can be detached from the box walls to provide openings for attaching conduits and fittings to the box.

This invention proposes to overcome these drawbacks of the prior art, in a particularly simple, quick, and efficient way.

In particular, the invention aims to provide a fastening unit for pipe joints that makes it possible to keep the unit sealed until the joints are fastened and in use too if not all the seats (if there are more than one) arranged to receive the joints are used, being, in addition, simple and economical to produce, and simple, practical, and effective to use.

### DISCLOSURE OF INVENTION

This invention, therefore, relates to a fastening unit for pipe joints as claimed by claim 1.

In this way, the invention makes it possible to have one or more blind seats on a single unit consisting of a generic moulded container made of polymer, including foam polymer. These seats are, therefore, closed until actual use in order to receive a joint and may be opened extremely simply and quickly when needed.

In this way, the seats remain closed until they are actually used to receive joints, and it is possible to only select the necessary seats (if the unit is provided with multiple seats).

Both during installation and use, the seat or seats that are not used to connect the joints remain closed.

In particular, when using in fluid circulation systems, the unit has a fluid-tight seal without needing to use plugs to close the seats that are not used.

It is, then, extremely simple and quick to tear-off open the seats, including manually and without requiring the use of tools.

Advantageously, the structure and the tabs form a monolithic piece made of plastic, i.e., plastic material (polymer material) . In this way, the unit is extremely simple and economical to make, as well as to use.

In some preferred embodiments, to make the tear-off opening easier and more effective, the tab is basically spiral shaped.

In particular, therefore, the weakened breaking line comprises an annular portion, extending along at least one part of a perimeter edge of the seat, and a spiral portion.

In other preferred embodiments, the tab has, instead, a basically circular shape.

The tab may, however, have different shapes, as the respective seat may also have different shapes.

To additionally facilitate the tear-off opening, the tab is provided with a projection that projects from one front face of the tab and is, preferably, positioned centrally on the tab (especially if the tab is spiral shaped) or near to a peripheral edge of the tab (especially if the tab is circular), so as to be easily grasped by a user.

The seats may be shaped so as to receive different types of joints (for example, joints with bayonet and/or interlocking and/or snap couplings), to improve the unit's versatility.

To this end, each seat has a perimeter edge shaped for coupling to a joint and shaped so as to define a bayonet and/or interlocking and/or snap coupling.

The unit of the invention finds application in various sectors, such as, for example: air distribution boxes made of plastic used inside controlled mechanical ventilation systems; plastic screen carriers for fastening joints that carry air to the final user; plastic boxes and/or containers for other applications.

### BRIEF DESCRIPTION OF THE DRAWINGS

Additional features and advantages of this invention will be clear from the description that follows of a non-limiting embodiment, with reference to the attached figures, in which:
- Figure 1 is a perspective view of a fastening unit for pipe joints in accordance with the invention;
- Figure 2 is a perspective view, with parts removed for clarity, of a detail of the unit in Figure 1;
- Figure 3 is a front plan view of the detail in Figure 2;
- Figure 4 shows the detail in Figure 2 in use, with a fastened joint;
- Figure 5 is a perspective view, with parts removed for clarity, of a detail of a variant of the fastening unit for pipe joints in accordance with the invention.

### BEST MODE FOR CARRYING OUT THE INVENTION

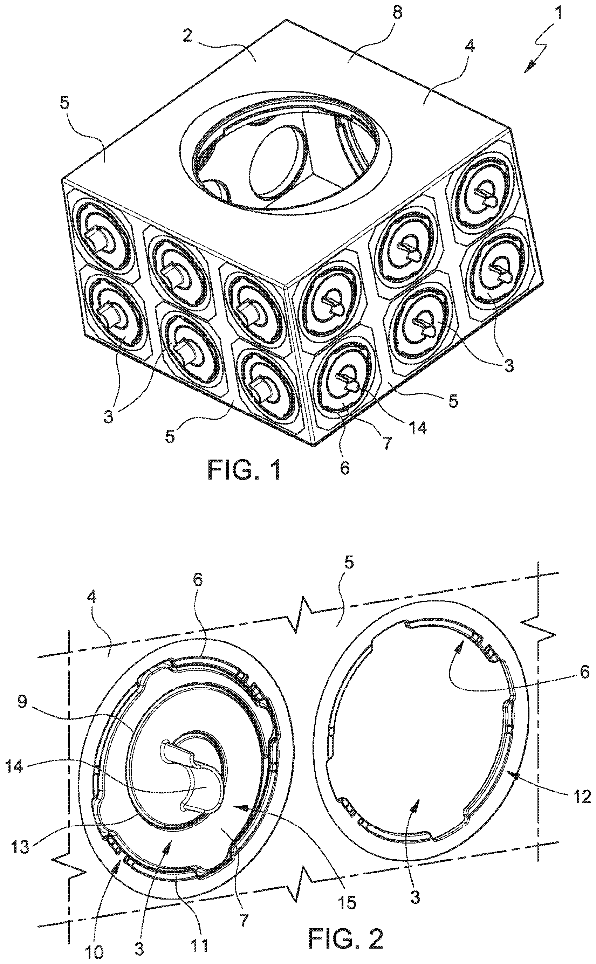

With reference to Figure 1, a fastening unit 1 for pipe joints comprises a plastic support structure 2 (plastic, i.e., polymer material), for example a basically rigid polymer material, which has multiple seats 3. It remains understood that the unit 1 may also be provided with a single seat 3.

The structure 2 may be variously shaped, including depending on the use for which it is intended.

In the non-limiting example shown, the structure 2 is box shaped and comprises a casing 4 provided with walls 5.

Clearly, the casing 4 may have different shapes and sizes.

In the example illustrated, the casing 4 has a parallelepipedal shape and has two larger, quadrangular bases (for example, square) and four rectangular side walls.

The seats 3 are arranged on one or more of the walls 5, for example on one or more of the side walls. The seats 3 may be variously arranged on the wall 5 and have different shapes and sizes.

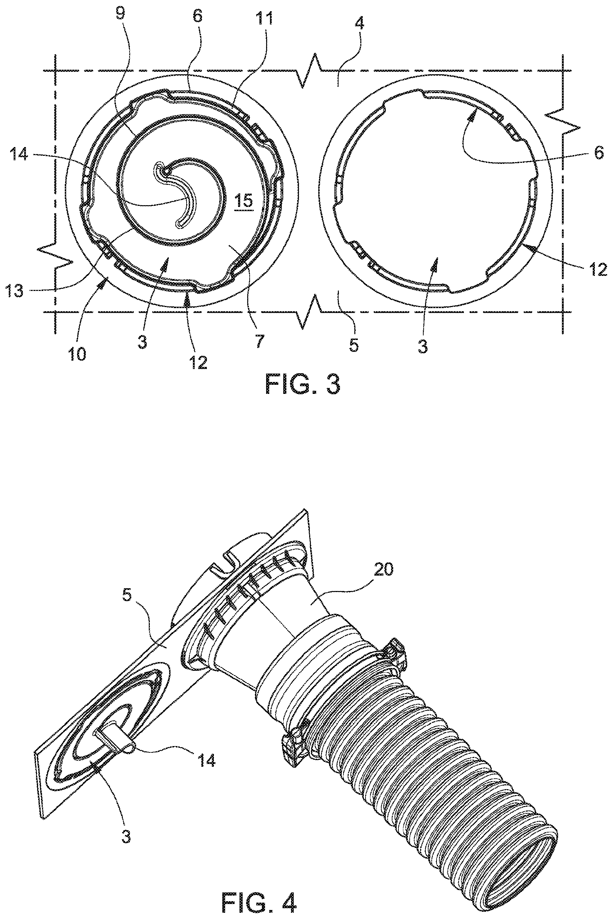

With reference to Figures 2 and 3 as well, the seats 3 delimit respective openings 6, formed passing through the wall 5, and are closed by respective closing tabs 7, integrally formed with the structure 2 and, in this case, with the casing 4 to form a monolithic piece 8.

The monolithic piece 8 formed by the structure 2 and by the tabs 7 is, in particular, made of plastic (i.e., polymer material), for example a substantially rigid or foam polymer material that is injection or steam moulded.

Each tab 7 has a weakened breaking line 9 that joins the tab 7 to the respective seat 3 and defines a tear-off opening 10 in order to remove the tab 7 from the seat 3 and to open the respective opening 6.

For example, the line 9 is defined by a notch or by a section with a reduced thickness compared to the thickness of the wall 5 and of the tab 7.

In the preferred embodiment shown in Figures 1-4, the weakened breaking line 9 is basically spiral shaped, and the tab 7 is also basically spiral shaped.

In particular, the weakened breaking line 9 comprises an annular portion 11, extending along at least one part of a perimeter edge 12 of the seat 3, and a spiral portion 13.

The tab 7 is provided with a projection 14 that projects from one front face 15 of the tab outside of the casing 4 in order for a user to grasp it.

In particular, the projection 14 is centrally placed on the tab 7 and projects basically perpendicular to the face 15.

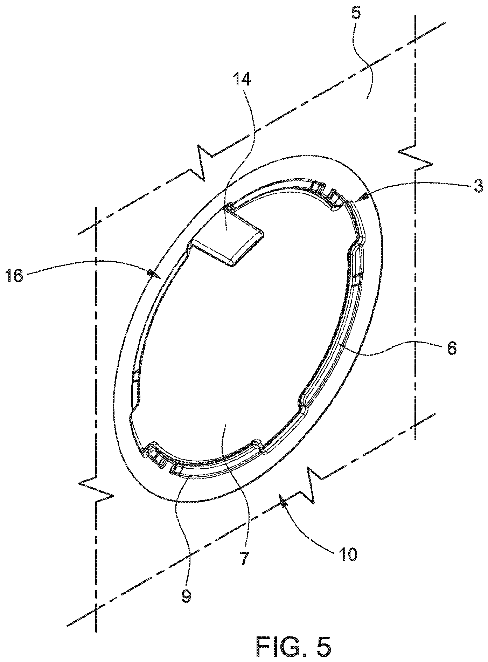

It is understood that the tab 7 may also not be spiral shaped and have a different shape instead. For example, in the example shown in Figure 5, the tab 7 has a basically circular shape. In this case, the projection 14 is advantageously placed near a peripheral edge 16 of the tab 7 that runs along the perimeter edge 12 of the seat 3.

The tab 7 may also, however, have different shapes, as the respective seat 3 may also have different shapes.

The perimeter edge 12 of the seat 3 is shaped for coupling to a joint.

In particular, the perimeter edge 12 is shaped so as to define a bayonet and/or interlocking and/or snap coupling.

Optionally, the perimeter edge 12 has a sealing seat shaped to receive a gasket as normally present on fastening joints.

As shown in Figure 4, in use, it is possible to open each seat 3 that the user wishes to use to connect a respective joint 20.

In order to open the seat 3, it is enough to grasp the projection 14 of the tab 7 that closes the seat 3. By pulling the tab 7 using the projection 14, the weakened breaking line 9 is broken so as to separate the tab 7 from the seat 3 and free the perimeter edge 12 of the seat 3. In the example described and illustrated here, the seat 3 may be opened manually, by simply directly grasping the projection 14 in order to pull the tab 7. It remains understood that it is also possible to use a tool in order to engage the projection 14 and to pull the tab 7 using the tool.

The perimeter edge 12 is, thus, available to receive a joint 20, shaped so as to engage the perimeter edge 12.

It is possible to only use the seats 3 needed for the joints 20 that need to be fixed. The other seats 3 remain closed by the tabs 7.

Finally, it is understood that additional modifications may be made to the fastening unit for pipe joints described and illustrated here, and variants thereof produced, which do not depart from the scope of the attached claims.

## Claims

1. A fastening unit (1) for pipe joints, comprising a plastic material support structure (2) having at least one seat (3) for a respective pipe joint formed on at least one wall (5) of the structure (2) and delimiting a respective opening (6), the at least one seat (3) being closed by a respective closing tab (7), integrally formed with the structure (2) to form a monolithic piece (8); the tab (7) having a weakened breaking line (9) joining the tab (7) to the respective seat (3) and defining a tear-off opening (10) for removing the tab (7) from the seat (3) so as to form the respective opening (6); **characterized in that** said at least one seat (3) has a perimeter edge (12) shaped so as to define a bayonet, and/or interlocking and/or snap coupling for coupling to the respective pipe joint.

2. The fastening unit according to claim 1, wherein the structure (2) has a plurality of seats (3) formed on one or more walls (5) of the structure (2) and delimiting respective openings (6); the seats (3) being closed by respective closing tabs (7), integrally formed with the structure (2) to form said monolithic piece (8); each tab (7) having a weakened breaking line (9) joining the tab (7) to the respective seat (3) and defining a tear-off opening (10) for removing the tab (7) from the seat (3) so as to form the respective opening (6).

3. The fastening unit according to claim 1 or 2, wherein the weakened breaking line (9) is basically spiral shaped and the tab (7) has a substantially spiral shape.

4. The fastening unit according to claim 3, wherein the weakened breaking line (9) comprises an annular portion (11), extending along at least a part of a perimeter edge (12) of the seat, and a spiral portion (13).

5. The fastening unit according to claim 1 or 2, wherein the tab (7) has a substantially circular shape.

6. The fastening unit according to one of the preceding claims, wherein the tab (7) is provided with a projection (14) projecting from a front face (15) of the tab (7) .

7. The fastening unit according to claim 6, wherein the projection (14) is positioned centrally on the tab (7), or in proximity of a peripheral edge (16) of the tab (7).

8. The fastening unit according to one of the preceding claims, wherein the structure (2) and the tabs (7) form a monolithic piece (8) made of plastic material.

9. The fastening unit according to one of the preceding claims, wherein the structure (2) is box shaped and comprises a casing (4) provided with walls (5), at least one of said walls (5) being provided with one or more seats (3) .

## Patentansprüche

1. Befestigungseinheit (1) für Rohrverbindungen, die eine Trägerstruktur (2) aus Kunststoffmaterial umfasst, die mindestens einen Sitz (3) für eine jeweilige Rohrverbindung aufweist, der an mindestens einer Wand (5) der Struktur (2) ausgebildet ist und eine jeweilige Öffnung (6) begrenzt, wobei der mindestens eine Sitz (3) durch eine jeweilige Verschlusslasche (7) verschlossen ist, die einstückig mit der Struktur (2) ausgebildet ist, um ein monolithisches Stück (8) zu bilden; wobei die Lasche (7) eine geschwächte Bruchlinie (9) aufweist, die die Lasche (7) mit dem jeweiligen Sitz (3) verbindet und eine Reißöffnung (10) zum Entfernen der Lasche (7) von dem Sitz (3) definiert, um die jeweilige Öffnung (6) zu bilden; **dadurch gekennzeichnet, dass** der mindestens eine Sitz (3) eine Umfangskante (12) aufweist, die so geformt ist, dass sie einen Bajonettverschluss und/oder eine Verriegelungs- und/oder Schnappverbindung zum Koppeln mit der jeweiligen Rohrverbindung definiert.

2. Befestigungseinheit nach Anspruch 1, wobei die Struktur (2) eine Vielzahl von Sitzen (3) aufweist, die an einer oder mehreren Wänden (5) der Struktur (2) ausgebildet sind und jeweilige Öffnungen (6) begrenzen; wobei die Sitze (3) durch jeweilige Verschlusslaschen (7) verschlossen sind, die einstückig mit der Struktur (2) ausgebildet sind, um das monolithische Stück (8) zu bilden; wobei jede Lasche (7) eine geschwächte Bruchlinie (9) aufweist, die die Lasche (7) mit dem jeweiligen Sitz (3) verbindet und eine Reißöffnung (10) zum Entfernen der Lasche (7) von dem Sitz (3) definiert, um die jeweilige Öffnung (6) zu bilden.

3. Befestigungseinheit nach Anspruch 1 oder 2, wobei die geschwächte Bruchlinie (9) im Wesentlichen spiralförmig ist und die Lasche (7) eine im Wesentlichen spiralförmige Form aufweist.

4. Befestigungseinheit nach Anspruch 3, wobei die geschwächte Bruchlinie (9) einen ringförmigen Abschnitt (11), der sich entlang mindestens eines Teils einer Umfangskante (12) des Sitzes erstreckt, und einen spiralförmigen Abschnitt (13) umfasst.

5. Befestigungseinheit nach Anspruch 1 oder 2, wobei die Lasche (7) eine im Wesentlichen kreisförmige Form aufweist.

6. Befestigungseinheit nach einem der vorhergehenden Ansprüche, wobei die Lasche (7) mit einem Vorsprung (14) versehen ist, der von einer Vorderseite (15) der Lasche (7) vorsteht.

7. Befestigungseinheit nach Anspruch 6, wobei der Vorsprung (14) mittig auf der Lasche (7) oder in der Nähe einer Umfangskante (16) der Lasche (7) positioniert ist.

8. Befestigungseinheit nach einem der vorhergehenden Ansprüche, wobei die Struktur (2) und die Laschen (7) ein monolithisches Stück (8) aus Kunststoff bilden.

9. Befestigungseinheit nach einem der vorhergehenden Ansprüche, wobei die Struktur (2) kastenförmig ist und ein mit Wänden (5) versehenes Gehäuse (4) umfasst, wobei mindestens eine der Wände (5) mit einem oder mehreren Sitzen (3) versehen ist.

## Revendications

1. Unité de fixation (1) pour joints de tuyau, comprenant une structure de support en matière plastique (2) ayant au moins un siège (3) pour un joint de tuyau respectif formé sur au moins une paroi (5) de la structure (2) et délimitant une ouverture respective (6), l'au moins un siège (3) étant fermé par une languette de fermeture respective (7), formée intégralement avec la structure (2) pour former une pièce monolithique (8) ; la languette (7) ayant une ligne de rupture affaiblie (9) reliant la languette (7) au siège respectif (3) et définissant une ouverture détachable (10) pour retirer la languette (7) du siège (3) afin de former l'ouverture respective (6) ; **caractérisée en ce que** ledit au moins un siège (3) a un bord périmétrique (12) façonné de manière à définir une baïonnette, et/ou un verrouillage et/ou un accouplement encliquetable pour l'accouplement au joint de tuyau respectif.

2. Unité de fixation selon la revendication 1, dans laquelle la structure (2) a une pluralité de sièges (3) formés sur une ou plusieurs parois (5) de la structure (2) et délimitant des ouvertures respectives (6) ; les sièges (3) étant fermés par des languettes de fermeture respectives (7), formées d'un seul tenant avec la structure (2) pour former ladite pièce monolithique (8) ; chaque languette (7) ayant une ligne de rupture affaiblie (9) reliant la languette (7) au siège respectif (3) et définissant une ouverture détachable (10) pour retirer la languette (7) du siège (3) de manière à former l'ouverture respective (6).

3. Unité de fixation selon la revendication 1 ou 2, dans laquelle la ligne de rupture affaiblie (9) est essentiellement en forme de spirale et la languette (7) a une forme essentiellement en spirale.

4. Unité de fixation selon la revendication 3, dans laquelle la ligne de rupture affaiblie (9) comprend une partie annulaire (11), s'étendant le long d'au moins une partie d'un bord périmétrique (12) du siège, et une partie en spirale (13).

5. Unité de fixation selon la revendication 1 ou 2, dans laquelle la languette (7) a une forme sensiblement circulaire.

6. Unité de fixation selon l'une des revendications précédentes, dans laquelle la languette (7) est pourvue d'une saillie (14) faisant saillie à partir d'une face avant (15) de la languette (7).

7. Unité de fixation selon la revendication 6, dans laquelle la saillie (14) est positionnée au centre de la languette (7), ou à proximité d'un bord périphérique (16) de la languette (7).

8. Unité de fixation selon l'une des revendications précédentes, dans laquelle la structure (2) et les languettes (7) forment une pièce monolithique (8) en matière plastique.

9. Unité de fixation selon l'une des revendications précédentes, dans laquelle la structure (2) a la forme d'une boîte et comprend un boîtier (4) pourvu de parois (5), au moins l'une desdites parois (5) étant pourvue d'un ou de plusieurs sièges (3).
